# EUROPÄISCHE PATENTSCHRIFT

(11) **EP 1 201 517 B1**
(45) Veröffentlichungstag und Bekanntmachung des Hinweises auf die Patenterteilung: **05.09.2007**
(21) Anmeldenummer: 01125126.1
(22) Anmeldetag: 23.10.2001
(51) Int. Cl.: B60S 1/48

(54) **Reinigungsanlage und Verfahren zum Betreiben derselben**
Cleaning assembly and operating method therefor
Ensemble de nettoyage et son procédé de fonctionnement

(30) Priorität: 24.10.2000 DE 10052828
(43) Veröffentlichungstag der Anmeldung: 02.05.2002
(73) Patentinhaber: SIEMENS AKTIENGESELLSCHAFT, 80333 München (DE)
(72) Erfinder: Petzold, Sven, 65191 Wiesbaden (DE)

(56) Entgegenhaltungen:
- EP-A- 0 820 911
- WO-A-98/56628
- DE-A- 3 729 025
- GB-A- 1 547 615
- US-A- 4 838 488

## Beschreibung

Die Erfindung betrifft eine Reinigungsanlage und ein Verfahren zum Betreiben einer Reinigungsanlage nach dem Oberbegriff des Anspruchs 1.

Solche Reinigungsanlagen werden in heutigen Kraftfahrzeugen zur Reinigung eingesetzt und sind somit aus der Praxis bekannt. Die geförderte Waschflüssigkeit wird über Waschflüssigkeitsleitungen zu den Waschdüsen geleitet. Vielfach sind die Waschdüsen nicht unmittelbar vor den Streuscheiben angeordnet, sondern werden nur für den Reinigungsvorgang in eine Betriebsposition vor den Streuscheiben verfahren.

Die GB-A-15 476 15 offenbart eine Reinigungsanlage, bei der eine einzelne Pumpe einen Pumpendruck von 3,5 bar an den Waschdüsen erzeugt. Die Pumpe fördert Waschflüssigkeit in eine Leitung, welche sich zu den Waschdüsen aufzweigt.

Die DE-A-37 29 025 offenbart eine Pumpe, welche in Abhängigkeit von ihren Drehsinn wahlweise in eine oder in eine andere Teilkammer fördert. Von den Teilkammern gelangt die Flüssigkeit über Auslässe zu den jeweiligen Verbrauchern.

Aus der US-A-4,838,488 ist eine drehrichtungsabhängige Pumpe bekannt geworden, welche in Verbindung mit einem Wechselventil Flüssigkeit wahlweise zu einer ersten oder einer zweiten Waschdüse fördert.

Da heutige Streuscheiben-Reinigungsanlagen ohne mechanische Elemente, sondern ausschließlich mit Waschflüssigkeit reinigen, arbeiten Streuscheiben-Reinigungsanlagen mit höherem Druck und höherer Durchflussmenge an Waschflüssigkeit als Scheibenreinigungsanlagen für die Windschutz- und Heckscheibe. Die hierfür erforderlichen Förderpumpen besitzen eine größere Pumpenkammer zur Erhöhung der Durchflussmenge und größere Elektromotoren zur Erhöhung des Drucks. Übliche Streuscheiben-Reinigungsanlagen arbeiten mit Drücken von ca. 4 bar und Durchflussmengen von ca. 7-8 l/min. Nachteilig dabei ist, dass Streuscheibenpumpen gegenüber Scheibenwaschpumpen ca. 30% größer sind, ein höheres Gewicht besitzen und mit Anlaufströmen von ca. 50 A ebenfalls über denen von Scheibenwaschpumpen liegen. Dementsprechend groß sind auch die elektrischen Verbindungen zur Förderpumpe ausgelegt. Weiterhin müssen aufgrund der hohen Durchflussmenge die Waschflüssigkeitsleitungen zur Verbindung der Förderpumpe mit den Waschdüsen einen größeren Querschnitt als die Schlauchleitungen für die Scheibenreinigungsanlage aufweisen. Um Streuscheiben-Reinigungsanlagen mit größeren Förderströmen und entsprechendem Druck betreiben zu können, sind die Waschflüssigkeitsleitungen zur Verstärkung gewebeummantelt. Das hat jedoch den Nachteil, dass derartige Leitungen weniger flexibel und damit zum einen schwerer zu montieren sind. Zum anderen benötigen diese Leitungen aufgrund der wesentlich größeren Biegeradien erheblich mehr Bauraum. Dies macht sich besonders in an den Waschdüsen angrenzenden Bereichen, wie beispielsweise in den Stoßfängern, nachteilig bemerkbar. Der an die Waschdüsen angrenzende Bereich wird bei heutigen Kraftfahrzeugen in der Regel für Versteifungselemente für die Crashsicherheit benötigt. Ein großer Querschnitt der Waschflüssigkeitsleitungen führt daher zu einer Verringerung der Crashsicherheit des Kraftfahrzeuges.

Der Erfindung liegt das Problem zugrunde, eine Reinigungsanlage der eingangs genannten Art und ein Verfahren zum Betrieb derselben zu schaffen, wobei die Reinigungsanlage bei gleichem Reinigungsergebnis kostengünstiger herstellbar, und mit einem geringen Aufwand in dem Kraftfahrzeug montierbar sein soll. Dieses Problem wird gelöst durch die Merkmale des Anspruchs 1.

Es wurde gefunden, dass eine Reinigungsanlage mit einer Förderpumpe, die bei annähernd gleichem Druck einen geringeren Durchfluss als herkömmliche Förderpumpen für Streuscheiben-Reinigungsanlagen aufweist, das gleiche Reinigungsergebnis erzielt. So arbeitet die erfindungsgemäße Förderpumpe bei einem Druck zwischen 3-4 bar und einem Förderstrom von 2-5 l/min. Die Förderpumpe hat den Vorteil, dass durch den veringerten Durchfluß Waschflüssigkeitsleitungen mit einem geringeren Innendurchmesser eingesetzt werden können. Die Reduzierung des Innendurchmessers ist dabei so groß, dass die Festigkeit von Kunststoffleitungen aus Wellrohr, PA oder EPDM ohne zusätzliche Gewebeummantelung für den Einsatz in einer Streuscheiben-Reinigungsanlage ausreichend ist, so dass diese nunmehr Verwendung finden. Neben der erheblichen Gewichtsersparnis, die gegenüber gewebeummantelten Leitungen bis zu einer Größenordnung betragen kann, sind vor allem die kleineren Biegeradien und der verringerte Durchmesser entscheidend dafür, dass diese Leitungen einen wesentlich geringeren Bauraum benötigen. Daher lassen sich die Waschflüssigkeitsleitungen besonders einfach im Kraftfahrzeug und in an die Waschdüsen angrenzenden Bereichen verlegen. Dank der Erfindung werden in diesen Bereichen nur sehr kleine Ausnehmungen für die Waschflüssigkeitsleitungen benötigt, so dass die Crashsicherheit nicht beeinträchtigt wird. Schließlich führen die mit diesen Leitungen einhergehenden geringeren Steckkräfte beim Verbinden der Leitungen zur einer weiter vereinfachten Montage.

Die Verringerung des Durchflusses läßt sich in besonders einfacher Weise durch die Reduzierung des Volumens der Pumpenkammer, insbesondere deren Höhe erzielen. So besitzen die Pumpenkammern von herkömmlichen Streuscheibenpumpen eine Höhe von 7-8 mm. Die Pumpenkammer der erfindungsgemäßen Förderpumpe kommt dagegen mit einer Höhe von 2-5 mm aus. Diese Ausgestaltung hat zudem den Vorteil, dass sich die axiale Länge der Förderpumpe verkürzt. Gleichzeitig kann auch ein kleinerer Elektromotor als Antrieb der Förderpumpe zum Einsatz kommen. Da dieser aufgrund seiner gegenüber herkömmlichen Streuscheibenpumpen geringeren Leistungswerte in axialer Erstreckung kürzer ist, verringert sich die Länge der erfindungsgemäßen Förderpumpe noch weiter, so dass die Förderpumpe insgesamt bis ca. 20 % kürzer gestaltet werden kann. Neben dem geringen Bauraum, den diese Förderpumpe benötigt, besteht ein entscheidender Vorteil in der Gewichtsersparnis. Hinzu kommt, dass aufgrund der geringeren Leistungswerte des Elektromotors das Bordnetz des Kraftfahrzeugs weniger belastet wird. Ebenso sind die Anlaufströme geringer, so dass auch die Anschlußleitungen kleiner dimensioniert werden können.

Mit dem Verfahren zum Betreiben der Reinigungsanlage wird die Waschflüssigkeit mittels der erfindungsgemäßen Förderpumpe aus dem Behälter für die Waschflüssigkeit angesaugt und bei einem Druck von ca. 3-4 bar und einer Duchflußmenge von ca. 2-5 I/min zu den jeweiligen, den Streuscheiben zugeordneten Waschdüsen gefördert. Um trotz der gegenüber herkömmlichen Streuscheiben-Reinigungsanlagen geringeren Durchflußmenge eine vergleichbare Reinigungswirkung zu erzielen, werden die Waschdüsen nacheinander mit Waschflüssigkeit beaufschlagt, so dass jede Streuscheibe mit der gesamten Durchflußmenge an Waschflüssigkeit gereinigt wird.

In einer vorteilhaften Ausgestaltung werden als Waschdüsen Fluidic-Düsen verwendet. Diese benötigen aufgrund ihrer Strahlcharakteristik für den gleichen Reinigungseffekt weniger Waschflüssigkeit als andere Waschdüsen.

Die Waschdüsen lassen sich gemäß einer anderen vorteilhaften Weiterbildung der Erfindung einfach ansteuern, wenn zwischen der Förderpumpe und den Waschdüsen mindestens ein Schaltventil zur abwechselnden Zuführung der Waschflüssigkeit zu den Streuscheiben angeordnet ist. Der Aufwand für ein Schaltventil kann jedoch entfallen, wenn die Förderpumpe in beide Drehrichtungen antreibbar ist und zwei drehrichtungsabhängige Auslässe aufweist.

Als besonders vorteilhaft wirken die Reinigungsanlage und das Verfahren bei der Verwendung von elektromotorisch verfahrbaren Hubdüsen. Aufgrund dessen, dass jede Hubdüse ansteuerbar ist, fällt der Aufwand für das wechselseitige Ausfahrens sehr gering aus. Weiterhin entfallen diverse Ventile zur Aufteilung der Waschflüssigkeit auf die entsprechenden Waschdüsen, da derartige Waschdüsen im eingefahrenen Zustand in der Regel gegen die Waschflüssigkeit abgedichtet sind.

In einer weiteren Ausgestaltung ist die Reinigungsanlage nicht ausschließlich zur Reinigung der Streuscheiben ausgebildet. Bei einer Verwendung einer Dualpumpe mit zwei drehrichtungsabhängigen Auslässen ist ein Auslaß mit den Waschdüsen der Streuscheiben verbunden und ein Auslaß ist mit den Waschdüsen der Windschutzscheibe verbunden. Dadurch wird für die Versorgung der Waschdüsen von Windschutz- und Streuscheiben nur noch eine Förderpumpe statt bisher zwei Förderpumpen benötigt. Ermöglicht wird diese Ausgestaltung durch die Reduzierung der Durchflußmenge der erfindungsgemäßen Förderpumpe gegenüber herkömmlichen Streuscheibenpumpen. Der mit dieser Förderpumpe erzielt Druck, der wesentlich höher ist als bei herkömmlichen Pumpen für die Windschutzscheibe, ist insbesondere bei hohen Fahrgeschwindigkeiten mit der damit verbundenen Ablenkung durch den Fahrtwind von Vorteil, da der Strahl nunmehr eine geringere Ablenkung erfährt. Des weiteren ist der höhere Druck vorteilhaft, wenn die Waschflüssigkeit durch die Zugabe von Frostschutzmitteln eine höhere Viskosität besitzt.

Die Erfindung läßt zahlreiche Ausführungsformen zu. Zur weiteren Verdeutlichung ihres Grundprinzips sind zwei davon in den Figuren dargestellt und werden nachfolgend beschrieben.
- Fig. 1:: eine schematische Darstellung der erfindungsgemäßen Reinigungsanlage,
- Fig. 2:: eine erfindungsgemäße Reinigungsanlage für die Reinigung von Streu- und Windschutzscheibe eines Kraftfahrzeuges.

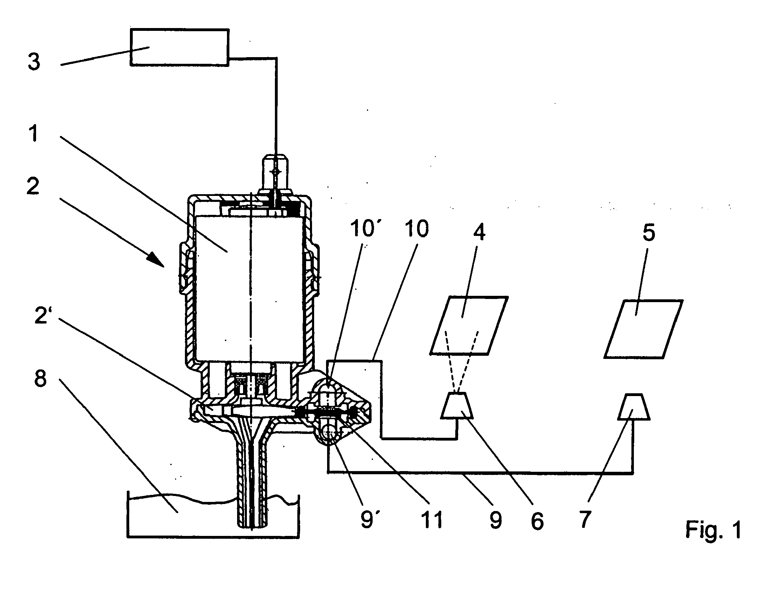

Figur 1 zeigt eine Reinigungsanlage mit einer von einem Elektromotor 1 angetriebenen Förderpumpe 2. Der Elektromotor 1 wird von einer Steuereinheit 3 angesteuert und mit elektrischem Strom versorgt. Weiterhin zeigt die Figur jeweils vor zwei Streuscheiben 4, 5 von Frontscheinwerfern eines Kraftfahrzeuges angeordnete Waschdüsen 6, 7. In einem Waschflüssigkeitsbehälter 8 befindet sich ein Vorrat an Waschflüssigkeit. Die als Dualpumpe ausgebildete Förderpumpe 2 saugt die Waschflüssigkeit in die Pumpenkammer 2' und von dort zu zwei drehrichtungsabhängigen Ausgängen 9' und 10', die über Waschflüssigkeitsleitungen 9 und 10 mit den Waschdüsen 7, 6 verbunden sind. Vor den Ausgängen 9' und 10' ist ein Ventil 11 angeordnet, welches drehrichtungsabhängig den einen oder den anderen Ausgang 9', 10' verschließt. Dadurch wird in Abhängigkeit von der durch die Steuereinheit 3 vorgegebenen Drehrichtung der Förderpumpe 2 entweder die Waschdüse 6 oder die Waschdüse 7 mit Waschflüssigkeit versorgen. Hierbei liefert die Förderpumpe 2 bei einem Druck von 3,8 bar einen Förderstrom von 2 l/min. Der Elektromotor 1 ist derart ausgebildet, dass er bei einer Drehzahl von 18000 U/min ein Drehmoment von 2,4 Ncm erzeugt.

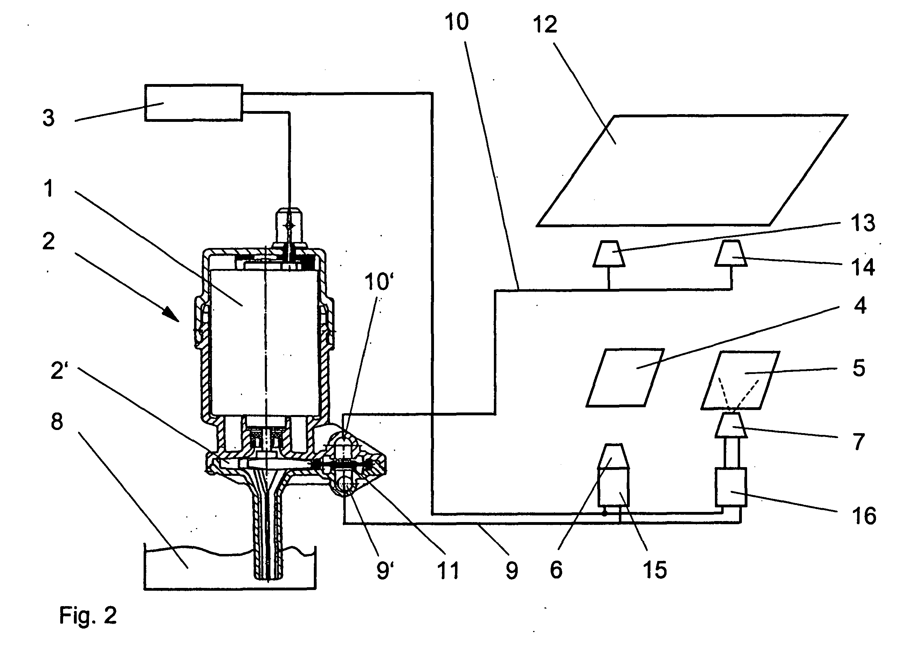

Die in Figur 2 gezeigte Reinigungsanlage ist gegenüber der Reinigungsanlage in Figur 1 dahingehend erweitert, dass neben den Streuscheiben 4, 5 auch die Windschutzscheibe 12 eines Kraftfahrzeugs gereinigt wird. Die Reinigungsvorrichtung arbeitet nur noch mit einer Förderpumpe 2. In diesem Fall ist die Förderpumpe 2 wieder als Dualpumpe ausgebildet. Die Waschdüsen 6, 7 der Streuscheiben 4, 5 sind über die Waschflüssigkeitsleitung 9 mit dem Ausgang 9' verbunden sind. Die Waschdüsen 13, 14 an der Windschutzscheibe 12 sind mit dem Ausgang 10' über die Waschflüssigkeitsleitung 10 verbunden. Die als Hubdüsen ausgebildeten Waschdüsen 6, 7 der Streuscheiben sind mittels Elektromotoren 15, 16 verfahrbar gestaltet. Gesteuert werden die Hubdüsen über die Steuereinheit 3. Im Betrieb der erfindungsgemäßen Reinigungsanlage werden die Hubdüsen nacheinander von einer Ruheposition in eine Betriebsposition ausgefahren, so dass immer nur eine Waschdüse 6, 7 die zugehörige Streuscheibe 4, 5 reinigt. Dadurch wird gewährleistet, dass die Waschflüssigkeit an jeder Waschdüse 6, 7 mit dem maximalen Druck anliegt. Die Reinigungssequenz wird immer nur dann gestartet, wenn die Förderpumpe 2 diejenige Drehrichtung aufweist, dass Waschflüssigkeit über den Ausgang 9' gefördert wird. Die Waschdüsen 6, 7 sind dabei so ausgebildet, dass sie in der Ruheposition keine Waschflüssigkeit abgeben. Dies kann bei Hubdüsen beispielsweise durch einen feststehenden Ventilkörper erfolgen, der den ausfahrbaren Teil der Hubdüse im Ruhezustand verschließt. Dreht die Förderpumpe 2 in die andere Drehrichtung, wird die Waschflüssigkeit über den Ausgang 10' zu den Waschdüsen 13, 14 gefördert. In dem momentan dargestellten Zustand steuert die Steuereinheit 3 den Elektromotor 1 derart, dass die Förderpumpe 2 Waschflüssigkeit zu dem Ausgang 9' und damit zu den Waschdüsen 6, 7 an den Streuscheiben 4, 5 fördert. Von der Steuereinheit 3 wird gleichzeitig der Elektromotor 16 angesteuert, so dass die Waschdüse 7 aus der Ruheposition in eine Betriebsposition vor der Streuscheibe 5 verfährt. In dieser Betriebsposition wird die Streuscheibe 5 gereinigt. Während dieses Reinigungsvorganges bleibt die Waschdüse 6 in ihrer Ruheposition.

## Patentansprüche

1. Reinigungsanlage für mehrere Streuscheiben eines Kraftfahrzeugs mit einer von einem Elektromotor (1) antreibbaren Förderpumpe (2), mit Waschflüssigkeitsleitungen zur Verbindung der Förderpumpe (2) mit den Waschdüsen (6, 7, 13, 14), wobei die Waschdüsen (6, 7, 13, 14) im Bereich der Streuscheiben angeordnet sind, wobei die Förderpumpe (2) zur Erzeugung eines hohen Drucks und einer geringen Durchflussmenge ausgebildet ist und wobei der erzeugte Druck 3 - 4 bar beträgt, **dadurch gekennzeichnet, dass** die von der Förderpumpe (2) erzeugte Durchflussmenge 2 - 5 1/min., vorzugsweise von 2,5 - 4 l/min., beträgt und dass die Förderpumpe (2) zwei drehrichtungsabhängige Ausgänge (9', 10') besitzt, wobei die den Streuscheiben (4, 5) zugeordneten Waschdüsen (6, 7) mit einem Ausgang (9') und die der Windschutzscheibe (12) zugeordneten Waschdüsen (13, 14) mit dem anderen Ausgang (10') verbunden sind und dass die Waschflüssigkestsleitungen (9,10) aus PA oder EPDM oder Wellrohr bestehen ohne zusätzliche Gewebeummmantelung.

2. Reinigungsanlage nach Anspruch 1, **dadurch gekennzeichnet, dass** die Pumpenkammer der Förderpumpe (2) eine Höhe von 2-5 mm besitzt.

3. Reinigungsanlage nach Anspruch 1 oder 2, **dadurch gekennzeichnet, dass** der die Förderpumpe (2) antreibende Elektromotor (1) bei einer Drehzahl von 16.000 - 20.000 U/min ein Drehmoment von (1,5 - 3,5 Ncm besitzt.

4. Reinigungsanlage nach zumindest einem der Ansprüche 1 bis 3, **dadurch gekennzeichnet, dass** als Waschdüsen (6, 7, 13, 14) Fluidic-Düsen angeordnet sind.

5. Reinigungsanlage nach zumindest einem der Ansprüche 1 bis 4, **dadurch gekennzeichnet, dass** die Waschdüsen (6, 7) elektromotorisch verfahrbare Waschdüsen sind und dass die Waschdüsen (6, 7) im eingefahrenen Zustand gegen die Waschflüssigkeit abgedichtet sind.

6. Reinigungsanlage nach zumindest einem der Ansprüche 1 bis 5, **dadurch gekennzeichnet, dass** zwischen der Förderpumpe (2) und den Waschdüsen (6, 7, 13, 14) mindestens ein Schaltventil (11) angeordnet ist.

7. Verfahren zum Reinigen mehrerer Streuscheiben eines Kraftfahrzeuges, **dadurch gekennzeichnet, dass** die Reinigungsanlage nach Anspruch 1 verwendet wird, und dass die von der Förderpumpe geförderte Waschflüssigkeit den einzelnen Waschdüsen derart zugeführt wird, dass die Scheiben des Kraftfahrzeugs nacheinander gereinigt werden.

## Claims

1. Cleaning installation for a plurality of diffusing screens of a motor vehicle, comprising a feed pump (2) drivable by an electric motor (1) and comprising washing liquid lines for connecting the feed pump (2) to the washing nozzles (6, 7, 13, 14), wherein the washing nozzles (6, 7, 13, 14) are disposed in the region of the diffusing screens, wherein the feed pump (2) is configured to generate a high pressure and a low flow rate, and wherein the generated pressure amounts to 3 - 4 bar, **characterized in that** the flow rate generated by the feed pump (2) amounts to 2 - 5 1/min., preferably from 2.5 - 4 1/min., and **in that** the feed pump (2) has two rotational-direction-dependent outlets (9', 10'), the washing nozzles (6, 7) assigned to the diffusing screens (4, 5) being connected to one outlet (9') and the washing nozzles (13, 14) assigned to the windscreen (12) being connected to the other outlet (10'), and **in that** the washing liquid lines (9, 10) consist of PA or EPDM or corrugated piping with no additional fabric cladding.

2. Cleaning installation according to Claim 1, **characterized in that** the pump chamber of the feed pump (2) has a height of 2 - 5 mm.

3. Cleaning installation according to Claim 1 or 2, **characterized in that** the electric motor (1) driving the feed pump (2), at a speed of 16,000 - 20,000 r.p.m., has a torque of 1.5 - 3.5 Ncm.

4. Cleaning installation according to at least one of Claims 1 to 3, **characterized in that**, as the washing nozzles (6, 7, 13, 14), fluidic nozzles are provided.

5. Cleaning installation according to at least one of Claims 1 to 4, **characterized in that** the washing nozzles (6, 7) are electromotively movable washing nozzles, and **in that** the washing nozzles (6, 7), in the retracted state, are sealed against the washing liquid.

6. Cleaning installation according to at least one of Claims 1 to 5, **characterized in that** between the feed pump (2) and the washing nozzles (6, 7, 13, 14) there is disposed at least one pilot valve (11).

7. Method for cleaning a plurality of diffusing screens of a motor vehicle, **characterized in that** the cleaning installation according to Claim 1 is used, and **in that** the washing liquid conveyed by the feed pump is fed to the individual washing nozzles in such a way that the screens of the motor vehicle are cleaned one after another.

## Revendications

1. Ensemble de nettoyage pour plusieurs verres diffuseurs de véhicule automobile, comportant une pompe d'alimentation (2) entraînée par un moteur électrique (1), des conduites de liquide de lavage reliant la pompe d'alimentation (2) au gicleurs de lavage (6, 7, 13, 14), les gicleurs de lavage (6, 7, 13, 14) étant placés à proximité des verres diffuseurs, la pompe d'alimentation (2) étant conçue pour générer une pression élevée et un faible débit de passage et la pression générée s'élevant à 3 - 4 bars, **caractérisé par le fait que** le débit de passage généré par la pompe d'alimentation (2) s'élève à 2 - 5 1/min, d'une façon préférentielle, à 2,5 - 4 1/min, que la pompe d'alimentation (2) a deux sorties (9', 10') dépendant du sens de rotation, les gicleurs de lavage (6, 7) affectés aux verres diffuseurs (4, 5) étant reliés à une sortie (9') et les gicleurs de lavage (13, 14) affectés au pare-brise (12) étant reliés à l'autre sortie (10'), et que les conduites de liquide de lavage (9, 10) sont en polyamide ou en éthylène-propylène-dien-monométhylène (ou EPDM) ou en tube ondulé sans revêtement supplémentaire en tissu.

2. Ensemble de nettoyage selon la revendication 1, **caractérisé par le fait que** la chambre de la pompe d'alimentation (2) a une hauteur de 2 - 5 mm.

3. Ensemble de nettoyage selon la revendication 1 ou 2, **caractérisé par le fait que** le moteur électrique (1) entraînant la pompe d'alimentation (2) développe, à une vitesse de rotation de 16.000-20.000 tours/minute, un couple de rotation de 1,5 - 3,5 Ncm.

4. Ensemble de nettoyage selon au moins l'une des revendications 1 à 3, **caractérisé par le fait que** des gicleurs Fluidic sont utilisés comme gicleurs de lavage (6, 7, 13, 14).

5. Ensemble de nettoyage selon au moins l'une des revendications 1 à 4, **caractérisé par le fait que** les gicleurs de lavage (6, 7) sont des gicleurs de lavage escamotables à moteur électrique et que les gicleurs de lavage (6, 7) sont, dans l'état escamoté, étanches contre le liquide de lavage.

6. Ensemble de nettoyage selon au moins l'une des revendications 1 à 5, **caractérisé par le fait que** au moins une soupape de commande (11) est placée entre la pompe d'alimentation (2) et les gicleurs de lavage (6, 7, 13, 14).

7. Procédé destiné au nettoyage de plusieurs verres diffuseurs de véhicule automobile, **caractérisé par le fait que** l'ensemble de nettoyage selon la revendication 1 est utilisé et que le liquide de lavage transféré par la pompe d'alimentation est envoyé aux différents gicleurs de lavage de telle manière que les verres du véhicule automobile sont nettoyés les uns après les autres.
